# DEMANDE DE BREVET EUROPEEN

(11) **EP 2 746 697 A2**
(43) Date de publication de la demande: **25.06.2014**
(21) Numéro de dépôt: 13306766.0
(22) Date de dépôt: 18.12.2013
(51) Int. Cl.: F24J 2/52

(54) **Pièce et ossature de support pour la fixation de modules photovoltaïques**

(30) Priorité: 19.12.2012 FR 1262287
(71) Demandeur: Financière GD, 41160 Saint Hilaire La Gravelle (FR)
(72) Inventeur: Deshayes, Gilles, 41100 Renay (FR)
(74) Mandataire: Aupetit, Muriel J. C.

(57) **Abrégé**

La présente invention concerne une pièce d'ossature pour la fixation d'un élément longitudinal (4) de support de modules photovoltaïques et sa coopération avec une toiture ondulée à nervures. En particulier, la pièce d'ossature, nommée pontet, comprend une partie centrale (3A) dotée d'une âme (32), et de deux ailes latérales (33, 34) parallèles, espacées, et connectées aux bords latéraux d'extrémités de l'âme, l'âme et les deux ailes latérales délimitant un espace d'accueil (30), dit cavité ouverte, dont la concavité est tournée à l'opposé de l'âme, caractérisée en ce qu'elle comporte une partie latérale (3B), jouxtant la partie centrale (3A), et comprenant une gorge (31) ouverte dans une direction opposée à l'ouverture (30) de la cavité de la partie centrale.

## Description

L'invention concerne le domaine des structures de support et fixation de modules photovoltaïques pour toitures, et plus particulièrement fixation sur toitures déjà existantes du type bacs acier en tôle nervurée.

Depuis quelques années, pour des raisons économiques, un intérêt certain quant à l'usage de l'énergie solaire s'est développé pour assurer en partie les besoins de consommation en électricité des habitations ou locaux industriels.

Pour fournir ces besoins en électricité, il est connu de disposer sur les toitures, une pluralité de modules photovoltaïques couplés en série les uns aux autres et générant un courant continu lorsqu'ils sont exposés à la lumière.

Certaines toitures de grande superficie, telles que celles de bâtiments d'élevage, sont même de plus en plus transformées ou construites, en y assemblant des modules photovoltaïques, l'électricité produite étant généralement revendue à des compagnies de production d'électricité.

Ce type de bâtiments industriels présente le plus souvent des couvertures en tôles généralement nervurées.

De nombreux systèmes d'ossature de support pour modules photovoltaïques existent sur le marché, comprenant des pièces d'interface se fixant de manière étanche sur la couverture en tôle, et des profilés aux formes diverses coopérant avec les pièces d'interface et s'étendant longitudinalement et transversalement à la couverture et sur lesquels sont fixés les modules photovoltaïques.

On recherche systématiquement à réduire le poids de telles structures de support comprenant cette multiplicité de pièces et profilés en acier, tout en procurant la rigidité indispensable au support des modules.

Réduire le poids de ces structures engendre avantageusement une diminution des coûts de production, de transport et de pose sur chantier, et également procure un allègement des installations que doivent supporter les toitures.

En outre, on vise à ce que ces structures soient aisées et rapides de mise en oeuvre.

L'invention a pour but de proposer une solution alternative aux structures connues de fixation sur toiture de modules photovoltaïques, qui réponde aux critères précités.

L'invention est donc relative à une pièce selon la revendication 1.

La pièce nommée pontet comporte une partie centrale dotée d'une âme et de deux ailes latérales parallèles (une aile proximale du corps du pontet et une aile distale), espacées et connectées aux bords latéraux d'extrémités de l'âme, l'âme et les deux ailes latérales délimitant un espace d'accueil, dit cavité ouverte, dont la concavité est tournée à l'opposée de l'âme. Elle comporte en outre une partie latérale, jouxtant la partie centrale et comprenant une gorge ouverte dans une direction opposée à l'ouverture de la cavité de la partie centrale.

La cavité de la partie centrale du pontet présente une concavité orientée dans une direction opposée à la concavité de la gorge de la partie latérale. On entend par concavité dans la suite de la description, un espace creux délimité par des parois courbes ou droites.

La partie centrale est destinée à enjamber ou passer par-dessus une nervure de la toiture, la cavité logeant la nervure, tandis que la gorge de la partie latérale est destinée à accueillir un élément longitudinal de support des modules photovoltaïques.

Le pontet, à la manière d'un pont, est destiné à enjamber la largeur de la nervure. Il ne doit pas s'appuyer sur la nervure (le sommet de la nervure) de la toiture afin de ne pas la déformer. La pluralité de pontet fixés sur la toiture est destinée à assurer l'assise de l'ossature portant les modules photovoltaïques. La cavité de la partie centrale présente un volume adapté pour loger la nervure sans que le pontet ne repose de son poids sur ladite nervure.

La pièce ainsi conçue de l'invention permet de gagner en nombre de pièces d'interface pour le montage des modules, ce pontet accueillant directement les profilés de support des modules.

Le pontet est monobloc. Il est par exemple fabriqué en aluminium par extrusion.

Le pontet est oblong dans un plan horizontal et présente :
- une longueur s'étendant depuis l'extrémité libre de la partie latérale jusqu'à l'aile latérale d'extrémité de la partie centrale, ce qui inclut la largeur de la gorge et la longueur de l'âme, la longueur étant transversale à la direction d'une nervure sur laquelle le pontet est monté en position d'utilisation ;
- une largeur, direction transversale à la longueur et parallèle à la direction d'une nervure en position montée.

Le pontet présente une longueur qui est supérieure à la base d'une nervure de la toiture et dépasse d'un côté de la nervure afin d'accueillir un profilé support des modules photovoltaïques.

La largeur est adaptée pour fournir la résistance requise et procurer une assise suffisante du profilé support dans la gorge du pontet.

La hauteur, dimension verticale en position montée du pontet, depuis l'âme du pontet jusqu'aux extrémités libres des ailes opposées à l'âme, est adaptée de façon que les extrémités libres des ailes opposées à l'âme buttent contre le fond de la toiture.

La cavité de la partie centrale et la gorge de la partie latérale sont comprises entre deux plans parallèles correspondant respectivement à l'âme de la partie centrale et à un fond délimitant en partie la gorge.

L'ouverture de la cavité de la partie latérale débouche dans un plan coplanaire à l'âme de la partie centrale.

La partie latérale comporte une paroi latérale :
- Qui délimite, avec l'une des ailes de la partie centrale (l'aile proximale), ladite gorge :
- Dont l'extrémité libre est à hauteur de ladite âme.

Ainsi, l'élément longitudinal (profilé) de support des modules peut être disposé au plus près de la toiture, limitant de manière conséquente la surélévation des modules par rapport à la toiture existante.

Selon une caractéristique, le pontet comporte une extension en saillie de la partie latérale et s'étendant perpendiculairement à l'âme, en particulier formant un prolongement de l'une des ailes de la partie centrale, et plus spécifiquement l'extension dépasse du plan de l'âme suivant la direction de l'ouverture de la gorge. Cette extension permet la fixation d'un côté du profilé au pontet.

La hauteur de la gorge de la partie latérale destinée à accueillir l'élément longitudinal et la hauteur de l'extension sont adaptées pour que l'extrémité libre de l'extension ne dépasse pas du plan de la face supérieure de l'élément longitudinal de sorte que à fixer l'élément longitudinal tout en minimisant la surélévation de l'élément longitudinal et donc des modules photovoltaïques par rapport à la toiture. L'élément longitudinal n'est donc pas surélevé par rapport à l'âme de la partie centrale du pontet.

La cavité de la partie centrale présente une section de forme trapézoïdale, en particulier délimitée par des jambes de force connectées chacune d'une part à l'âme et d'autre part à l'extrémité libre de chacune des ailes, opposée à l'âme. Cette section est adaptée à la section de la nervure pour loger celle-ci.

Avantageusement, le fond de ladite gorge comprend une rainure longitudinale, destinée à l'écoulement de l'eau en utilisation du pontet. La rainure est agencée de manière à être orientée dans la direction des nervures de la toiture en position montée du pontet, c'est-à-dire dans le sens de la pente.

Avantageusement, le pontet est réversible par rapport à un plan vertical passant par l'axe de fixation du pontet à travers l'âme, en vue de son utilisation.

L'invention est également relative à une ossature pour la fixation de modules photovoltaïques, comprenant au moins un pontet tel que décrit ci-dessus et au moins un élément longitudinal disposé dans la gorge du pontet.

Dans la suite de la description, les termes « horizontal », « vertical », « supérieur », « inférieur », « haut », « bas », s'entendent en qualifiant des éléments de l'ossature dans le cadre de l'installation de cette dernière sur un surface horizontale ou inclinée par rapport à la verticale.

Selon une caractéristique, l'élément longitudinal est un tube, de préférence parallélépipédique.

La gorge de la partie latérale du pontet présente une section adaptée à la section de l'élément longitudinal de l'ossature.

L'élément longitudinal est fixé au pontet via une extension en saillie de l'âme dudit pontet (selon un prolongement de l'aile proximale du pontet) et l'une des parois de la gorge, opposée à la partie centrale du pontet.

L'ossature est ainsi destinée à être montée et fixée sur une couverture existante comprenant en particulier des nervures, par exemple une couverture du type bacs acier à tôle nervurée, pour y fixer des modules photovoltaïques.

La fixation des modules sur l'ossature se fait via des pièces de fixation du type connu. Usuellement, ces pièces incluent un étrier d'extrémité, dit encore étrier final dans le jargon des dispositifs de fixation de modules photovoltaïques, et un étrier intermédiaire. Chaque pièce présente au moins une surface de fixation (horizontale) pour coopérer par vissage avec un élément longitudinal (tube), un flanc (vertical) contre lequel vient en butée un module, et une aile d'accroche destinée à être plaquée contre la surface supérieure du module et verrouillée par le vissage de la surface de fixation.

La présente invention est maintenant décrite à l'aide d'exemples uniquement illustratifs et nullement limitatifs de la portée de l'invention, et à partir des illustrations ci-jointes, dans lesquelles :
- La figure 1 représente une vue en perspective et de dessus de modules photovoltaïques montés sur une couverture en tôle nervurée, et fixés à l'aide de l'ossature de l'invention;
- La figure 2 est une vue en perspective éclatée et de détail de l'ossature de l'invention;
- La figure 3 est une vue partielle en en perspective et de dessus de l'ossature en cours de montage sur la couverture ;
- La figure 4 est une autre vue partielle de côté et en perspective de l'ossature montée;
- La figure 5 illustre une vue en coupe transversale d'une pièce d'interface de l'ossature de l'invention, le pontet;
- La figure 6 illustre une vue partielle en perspective avant aboutement de deux tubes de l'ossature ;
- Les figures 7a et 7b sont des vues en coupe de deux variantes d'agencements de l'ossature de l'invention montée sur une couverture en tôle nervurée ;
- Les figures 8a et 8b illustrent des vues en perspective de détail de la fixation des modules sur l'ossature via deux pièces distinctes de fixation
- La figure 9 est une vue schématique partielle de la fixation de modules sur l'ossature de l'invention, selon le côté longitudinal (sens de la pente) de la toiture.

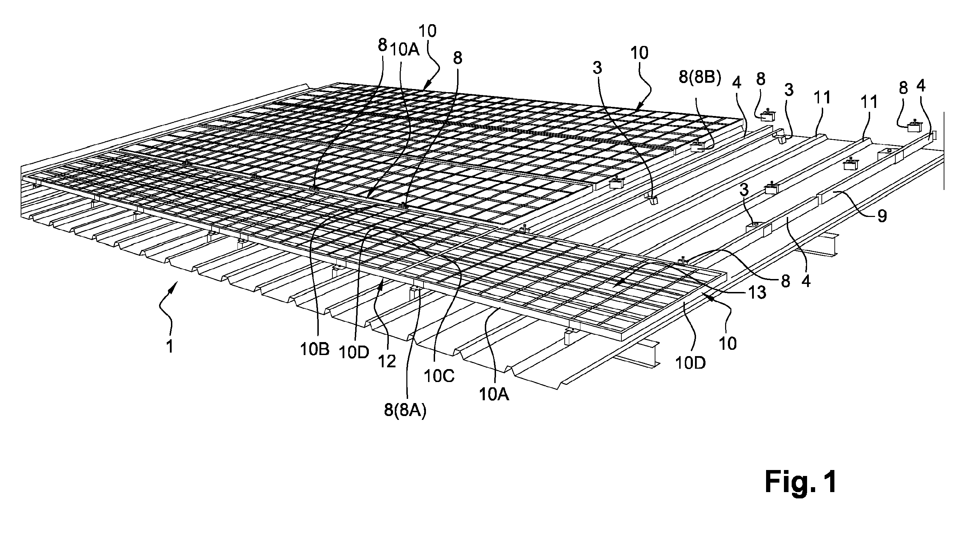

La figure 1 illustre une couverture 1 en tôle nervurée et des modules photovoltaïques 10 agencés par exemple en mode paysage, leurs grands côtés (côtés longitudinaux) étant transversaux à la pente de la toiture, et fixés sur l'ossature 2 de l'invention en deux zones de fixation 12 et 13 par côté longitudinaux. Une aire de la couverture n'est pas recouverte de modules de façon à montrer les différents éléments structurels de l'ossature 2.

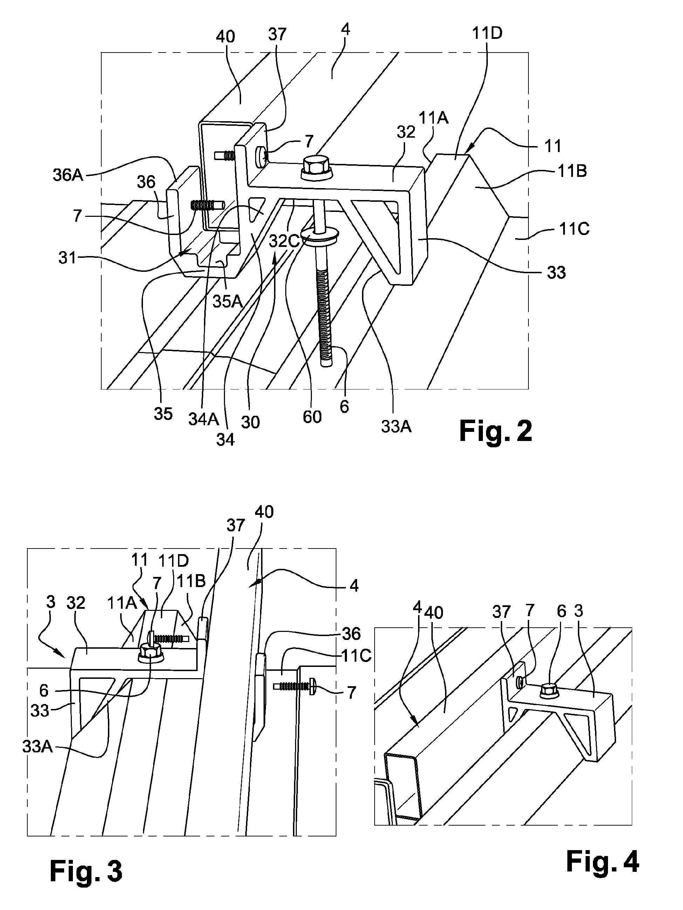

La couverture est du type connu, se présentant sous la forme de bacs en tôles ondulées, possédant des nervures longitudinales 11. Chaque nervure 11 tel que visible en détail sur les figures 2 et 3, comporte deux flancs 11A et 11B connectés au fond 11C d'un bac et se rejoignant en un sommet tronqué 11D. La section de chaque nervure 11 est de préférence tel qu'illustré ici, trapézoïdale.

L'ossature de l'invention comporte des pièces d'interface 3, nommées pontets, destinées à être fixées sur la couverture en tôle 1, en particulier en enjambant transversalement les nervures longitudinales 11, et des éléments longitudinaux 4 du type tubes destinés à être associés aux pontets 3 et à supporter les modules. La fixation des modules sur l'ossature est réalisée via des pièces de fixation 8 coopérant d'une part avec chaque cadre des modules dans les zones de fixation 12 et 13, et d'autre part avec les tubes 4.

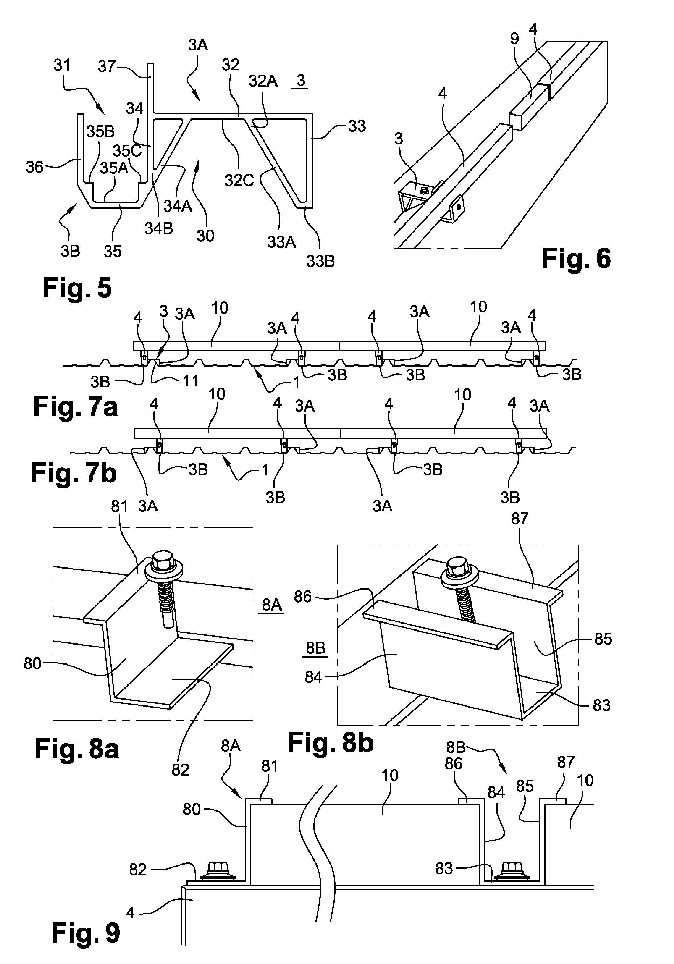

Les tubes 4 sont espacés deux à deux d'une distance correspondant à la largeur séparant les zones de fixation 12 et 13 d'un module. Les tubes 4 s'étendent parallèlement aux nervures 11. En fonction de la dimension de la toiture longitudinalement aux nervures (parallèlement à la pente de la toiture), les tubes 4 présentent une longueur adaptée ou bien sont aboutés les uns aux autres via des pièces de liaison 9 (telles que visible également en figure 6). Ces pièces de liaison comprennent par exemple deux extrémités présentant chacune un rétreint adapté pour s'emmancher dans deux tubes respectifs à relier.

Les modules sont généralement rectangulaires. Ils sont ici assemblés en mode "paysage", c'est-à-dire que leurs grands côtés 10A et 10B sont transversaux à la pente de la toiture. Ils peuvent en variante être agencés en mode "portrait", leurs grands côtés étant parallèles à la pente de la toiture.

Les modules sont disposés les uns contre les autres de sorte que le petit côté 10C d'un module bute contre le petit côté 10D du module adjacent. En revanche les grands côtés 10 A et 10B ne butent pas les uns contre les autres mais sont disposés de manière extrêmement proche car séparés par les pièces de fixation 8.

Selon l'invention, les éléments longitudinaux 4 de support et de fixation des modules présentent une forme très simple sans nécessiter une forme complexe de profilé. Il s'agit de tubes parallélépipédiques.

Les tubes 4 sont de préférence métalliques, tels qu'en acier inoxydable, acier électro-zingué, acier galvanisé, ou aluminium. En variante, les tubes peuvent être en matériau composite. Les tubes sont de préférence obtenus par extrusion.

Les pontets 3 de l'ossature sont de préférence métalliques, en particulier en aluminium extrudé.

La vue de détail et éclatée de la figure 2 illustre un pontet 3 et un tube 4 avec, d'une part les moyens de fixation 6 du pontet à la couverture en tôle, et d'autre part les moyens de montage 7 du tube 4 audit pontet 3.

Les figures 3 et 4 illustrent, respectivement en cours de montage, et une fois montés, le pontet 3 fixé sur la couverture et le tube 4 en position montée sur le pontet, le tube 4 présentant sa face supérieure 40 en saillie du pontet afin de constituer le plan de réception et de support des modules photovoltaïques.

Les moyens de fixation 6 du pontet consistent (figure 2) en une tige filetée dotée d'un joint 60. La tige filetée est associée au pontet en le traversant et est destinée à être vissée dans l'épaisseur de la couverture en tôle à travers la nervure 11, le joint 60 étant pris en sandwich entre la nervure 11 et la face inférieure 32C du pontet. Le joint 60 est destiné à entourer l'orifice de vissage de la tige dans la nervure.

Les moyens de montage 7 du tube 4 sur le pontet 3 consistent en des vis, de préférence auto-perforeuses.

En regard de la figure 5, le pontet 3 comporte une partie centrale 3A présentant une forme générale en pont ménageant une cavité d'accueil 30 dont la concavité est orientée vers la bas en position de montage dudit pontet, et une partie latérale 3B dotée d'une gorge 31 à section générale en U dont l'ouverture est orientée vers le haut en position de montage. La cavité 30 et l'ouverture 31 possèdent des concavités de directions opposées.

En position montée du pontet sur la couverture 1 telle qu'illustré sur la vue de détail de la figure 3, la partie centrale ou pont 3A est disposé à cheval sur la nervure 11 de la tôle de couverture avec ses extrémités inférieures reposant sur le fond 11C de la toiture, tandis que la gorge 31 de la partie latérale 3B accueille un tube 4 de l'ossature.

Tel que détaillé sur la figure 5, la partie centrale 3A du pontet comporte une âme 32, deux ailes parallèles et espacées 33 et 34 qui sont connectées respectivement aux deux extrémités de l'âme. L'âme et les deux ailes délimitent la cavité 30. La cavité est ouverte à l'opposé de l'âme 32. De préférence, la cavité est également ouverte transversalement à l'âme, permettant une préhension aisée du pontet.

La cavité 30 présente une forme adaptée à la forme de la nervure de la tôle de couverture afin d'être au plus près de la nervure sans toutefois l'écraser.

Ici, la nervure 11 présente une forme à section trapézoïdale dont la petite base est en partie supérieure. Afin d'épouser cette géométrie, la cavité 30 possède une section transversale à l'âme, qui est de forme trapézoïdale dont la petite base est formée par l'âme 32 et la grande base correspond à l'écartement des extrémités inférieures 33B et 34B des ailes 33 et respectivement 34, extrémités opposées à l'âme 32.

Plus particulièrement, la partie centrale 3A du pontet comporte deux jambes de force 33A et 34A de direction inclinée par rapport à la verticale, chacune reliant l'extrémité inférieure 33B d'une aile, respectivement 34B, à une zone proximale 32A, respectivement 32B, de l'âme 32 pour constituer cette section ouverte 30 trapézoïdale. Les zones proximales 32A et 32B sont espacées d'une grandeur correspondant à la dimension de la petite base.

Les jambes de forces 33A et 34A participent par ailleurs à la rigidité du pontet et à sa résistance mécanique lorsque celui-ci subit le poids des modules.

Le pontet comporte en outre la partie latérale 3B jouxtant la partie centrale 3A. La partie latérale 3B comporte la gorge 31 destinée à accueillir un tube 4 et délimitée par un fond 35, l'aile 34 de la partie centrale du pontet et une paroi 36 parallèle et en regard de l'aile 34.

La cavité 30 de la partie centrale 3A et la gorge 31 de la partie latérale 3B sont comprises entre deux plans parallèles correspondant respectivement à l'âme 32 de la partie centrale et au fond 35 de la gorge. L'ouverture de la cavité 30 débouche dans un plan coplanaire à l'âme 32, la paroi 36 présentant son extrémité libre 36A à hauteur de l'âme 32.

Le tube 4 est destiné à être engagé par coincement dans la gorge 31 en reposant dans son fond 35 et en étant plaqué contre l'aile 34 et la paroi 36.

De préférence, le fond 35 comporte une rainure 35A ménageant deux rebords opposés 35B et 35C sur lesquels est destiné à reposer le tube 4. La rainure 35A constitue une goulotte d'évacuation de l'eau de pluie ou de condensation une fois les modules en place sur l'ossature.

Afin d'assurer la fixation du tube par les moyens de montage 6, l'aile 34 du pontet présente une extension 37 se prolongeant (verticalement) dans le plan de ladite aile et faisant saillie perpendiculairement à l'âme 32. Le tube 4 peut ainsi être fixé (figures 2 et 3) au niveau de ses deux côtés verticaux, de manière à se visser au travers d'une part de la paroi 36 de la du pontet et d'autre part de l'extension 37.

A titre d'exemple nullement limitatif, le pontet présente les dimensions suivantes et de l'ordre de :
- Longueur de l'âme 32 entre les ailes 33 et 34 : 80 mm ;
- Hauteur depuis l'âme 32 jusqu'à l'extrémité inférieure des ailes : 50 mm ;
- Angle entre chaque jambe de force 33A, 34A et l'âme 32 : 120 °;
- Largeur de la gorge entre l'aile 34 et la paroi 36 : 30 mm ;
- Hauteur de l'extension 37 par rapport à l'âme 32 : 25 mm ;
- Largeur du pontet et correspondant à la longueur de la gorge 31 : 30 mm.

Le pontet est avantageusement réversible en position de montage, c'est-à-dire que la partie latérale 3B peut être agencée d'un côté ou de l'autre de la nervure 11, à droite ou à gauche, la partie centrale 3A étant assise à cheval sur la nervure.

Cette alternative d'agencement permet d'adapter l'écartement de deux tubes 4 afin de les disposer de manière idoine au niveau des zones de fixation 12 et 13 d'un module. En effet, en regard de la figure 1, les deux zones de fixation 12 et 13 d'un module qui sont présentes sur chaque côté longitudinal 10A, 10B et transversal à deux tubes de support 4, doivent respecter une plage normalisée d'écartement pour assurer la tenue mécanique dudit module. En fonction du nombre de modules à disposer et de leurs dimensions, il sera aisé de s'adapter à l'écartement souhaité. Les figures 7a et 7b montrent deux exemples d'installation des pontets permettant de modifier l'écartement entre les tubes 4 de façon à s'adapter à l'emplacement imposé des zones de fixation.

Par conséquent, selon l'invention, les éléments de l'ossature et moyens de fixation et montage de cette ossature sont ainsi extrêmement réduits en nombre, se limitant aux pontets 3, à des profilés support 4 des modules qui sont en outre très simples de forme, s'agissant de tubes parallélépipédiques, ainsi qu'une tige filetée par pontet et deux vis de fixation par tube et pontet.

Les moyens de fixation des pontets sont ceux usuellement utilisés, à savoir des tiges filetées avec un joint d'étanchéité d'interface. Les moyens de fixation s'étendent selon un axe dit de fixation du pontet en traversant l'âme 32 de manière centrale.

La simplicité des profilés sous forme de tubes provient avantageusement selon l'invention :
- d'utiliser en tant que système d'interface entre les tôles nervurées et l'ossature de support, des pièces monobloc réduites d'encombrement sous forme de pontets,
- de la forme innovante de ces pontets, qui en outre présentent une forme aisée à fabriquer et permet d'adapter la position des tubes par rapport à la zone de fixation d'un module le long de sa dimension longitudinale.

De plus, la présence de la gorge 31 du pontet destinée à recevoir un tube et sa disposition au même niveau horizontal que la cavité 30 dans laquelle se loge la nervure de la toiture, procurent un agencement des tubes 4 quasiment à hauteur des nervures 11, évitant une surélévation trop importante des modules par rapport au dessus des nervures de la toiture. Ainsi, les modules ne sont espacés en hauteur que de 25 mm par rapport à l'extrémité supérieure (sommet) des nervures.

Enfin, la fixation des modules sur l'ossature de l'invention est obtenue par la coopération de pièces de fixation 8 avec les tubes 4. Ces pièces de fixation sont de type connu.

Les pièces de fixation 8 sont de deux formes, l'une référencée 8A telle qu'illustrée sur la figure 8a et dite étrier final, assurant une fixation des modules en extrémité d'installation, l'autre référencée en 8B sur la figure 8b, dite étrier intermédiaire, assurant la fixation simultanée de deux côtés de deux modules respectivement adjacents.

En regard des figures 8a et 9, l'étrier final 8A comporte un flanc vertical 80 destinée à servir de butée pour le module, une aile d'accroche 81 perpendiculaire au flanc et connectée à l'un de ses bords, et destinée à venir en appui contre la face supérieure du cadre du module, et une surface de fixation 82 perpendiculaire au flanc et connectée à son bord opposé, et parallèle à l'aile d'accroche en étant de direction opposée. La surface de fixation est destinée à être vissée dans un tube 4.

En regard des figures 8b et 9, l'étrier intermédiaire 8B présente une section générale en U à fond 83 et deux flancs parallèles et espacés 84 et 85, et aux extrémités supérieures desquelles sont connectées deux ailes supérieures d'accroche 86 et 87 coplanaires et de direction opposée. Le fond 83 est destiné à être vissé sur un tube 4, tandis que les ailes d'accroche sont destinées à être plaquées et serrées contre la face supérieure de cadres de deux modules adjacents.

Le montage de la toiture grâce à l'ossature de l'invention est à présent décrit.

En fonction de nombre de modules, de leurs dimensions et de leur installation en mode paysage ou portrait, il est au préalable calculé le nombre d'éléments nécessaires à l'ossature et leur disposition sur la toiture existante.

On monte ensuite l'ossature en fixant les pontets 3 sur la toiture par vissage des moyens de fixation dans les nervures 11, tout en ayant disposé la partie latérale 3B du côté idoine, puis en emboîtant les tubes 4 dans les gorges 31 et en les y vissant.

On fixe ensuite chaque module 10 en partant de l'extrémité inférieure de la toiture pour remonter par colonne.

La fixation des modules est réalisée ainsi en regard des figures 1 et 9 :
- les pièces 8A d'extrémité inférieure sont pré-vissées dans les tubes 4 par leur surface de fixation 82 et au niveau des zones de fixation 12 et 13 ;
- on dispose le premier module en le mettant en butée par son côté 10A contre le flanc 80 des pièces 8A, l'aile d'accrochage 81 venant s'appuyer contre la surface supérieure du cadre du module ;
- on visse de manière à serrer les pièces 8A contre le cadre du module ;
- on installe les pièces intermédiaires 8B en les pré-vissant dans leur fond 83 sur les tubes 4 et en vis-à-vis des pièces 8A, de sorte que l'aile d'accrochage 86 s'appuie sur le cadre du côté 10B du module ;
- on amène un deuxième module en butée par son côté 10A contre le flanc 85 des pièces intermédiaires 8B ;
- on visse les pièces intermédiaires 8B de manière à les verrouiller contre les cadres des premier et deuxième modules ;
- on poursuit l'installation avec de nouvelles pièces intermédiaires 8B puis un troisième module jusqu'à installer le dernier module de la colonne pour lequel on fixera deux pièces d'extrémité 8A ;
- on continue l'installation en fixant de manière similaire la deuxième colonne et en partant du bas de la toiture.

L'ossature de l'invention est ainsi simple et rapide de mise en oeuvre, ainsi que la fixation des modules sur l'ossature, minimisant les opérations de montage et ne nécessitant que peu d'éléments, tout en ne surélevant quasiment pas les modules photovoltaïques au-dessus de la couverture et garantissant la rigidité requise de support et de fixation.

## Revendications

1. Pièce d'ossature pour la fixation d'un élément longitudinal (4) de support de modules photovoltaïques et sa coopération avec une toiture ondulée à nervures, comportant une partie centrale (3A) dotée d'une âme (32) et de deux ailes latérales (33, 34) parallèles, espacées, et connectées aux bords latéraux d'extrémités de l'âme, l'âme et les deux ailes latérales délimitant un espace d'accueil (30), dit cavité ouverte, dont la concavité est tournée à l'opposé de l'âme, **caractérisée en ce qu'**elle comporte une partie latérale (3B), jouxtant la partie centrale (3A), et comprenant une gorge (31) ouverte dans une direction opposée à l'ouverture (30) de la cavité de la partie centrale, de façon que la partie centrale est destinée à enjamber ou passer par-dessus une nervure de la toiture, la cavité logeant la nervure, tandis que la gorge de la partie latérale est destinée à accueillir l'élément longitudinal de support des modules photovoltaïques.

2. Pièce selon la revendication 1, **caractérisée en ce que** la cavité (30) de la partie centrale et la gorge (31) de la partie latérale sont comprises entre deux plans parallèles correspondant respectivement à l'âme (32) de la partie centrale et à un fond (35) délimitant en partie la gorge (31).

3. Pièce selon la revendication 1 ou 2, **caractérisée en ce que** la partie latérale (3B) comporte une paroi latérale (36) qui délimite, avec l'une des ailes (34) de la partie centrale, ladite gorge (31), et dont l'extrémité libre (36A) est à hauteur de ladite âme (32).

4. Pièce selon l'une quelconque des revendications précédentes **caractérisée en ce qu'**elle comporte une extension (37) en saillie de la partie latérale (3B) et s'étendant perpendiculairement à l'âme (32), en particulier formant un prolongement de l'une des ailes (34) de la partie centrale.

5. Pièce selon l'une quelconque des revendications précédentes, **caractérisée en ce que** la cavité (30) de la partie centrale présente une section de forme trapézoïdale, en particulier délimitée par des jambes de force (33A, 34A) connectées chacune, d'une part à l'âme (32) et d'autre part à l'extrémité libre de chacune des ailes, opposée à l'âme.

6. Pièce selon l'une quelconque des revendications précédentes, **caractérisée en ce qu'**elle est réversible par rapport à un plan vertical passant par son axe de fixation à travers l'âme, en vue de son utilisation.

7. Pièce selon l'une quelconque des revendications précédentes, **caractérisée en ce que** la gorge (31) de la partie latérale présente un fond (35) comprenant une rainure (35A) destinée à l'écoulement de l'eau en utilisation de la pièce.

8. Ossature pour la fixation de modules photovoltaïques comprenant au moins une pièce (3) selon l'une quelconque des revendications précédentes et au moins un élément longitudinal (4) disposé dans la gorge (31) de la pièce.

9. Ossature selon la revendication précédente, **caractérisée en ce que** l'élément longitudinal (4) est un tube, de préférence parallélépipédique.

10. Ossature selon l'une quelconque des revendications 8 à 9, **caractérisée en ce que** la gorge (31) de la partie latérale (3B) du pontet présente une section adaptée à la section de l'élément longitudinal de l'ossature.

11. Ossature selon l'une quelconque des revendications 8 à 10, **caractérisée en ce que** l'élément longitudinal (4) est fixé au pontet (3) via une extension (37) en saillie de l'âme (32) dudit pontet et l'une des parois (36) de la gorge, opposée à la partie centrale (A) du pontet.

12. Toiture ondulée à nervures (11) sur laquelle sont fixés une pluralité de pièces selon l'une quelconque des revendications 1 à 7 ou sur laquelle est fixée une ossature selon l'une des revendications 8 à 11.
